# EUROPÄISCHE PATENTSCHRIFT

(11) **EP 2 849 904 B1**
(45) Veröffentlichungstag und Bekanntmachung des Hinweises auf die Patenterteilung: **06.06.2018**
(21) Anmeldenummer: 13720317.0
(22) Anmeldetag: 24.04.2013
(51) Int. Cl.: B22F 3/11

(54) **VERFAHREN ZUR HERSTELLUNG EINER SPEICHERSTRUKTUR EINER ELEKTRISCHEN ENERGIESPEICHERZELLE**
METHOD FOR PRODUCING A STORAGE STRUCTURE OF AN ELECTRICAL ENERGY STORAGE CELL
PROCÉDÉ DE FABRICATION D'UNE STRUCTURE ACCUMULATRICE D'UN ÉLÉMENT ACCUMULATEUR D'ÉNERGIE ÉLECTRIQUE

(30) Priorität: 15.05.2012 DE 102012208112
(43) Veröffentlichungstag der Anmeldung: 25.03.2015
(73) Patentinhaber: Siemens Aktiengesellschaft, 80333 München (DE)
(72) Erfinder: SCHUH, Carsten, 85598 Baldham (DE); SOLLER, Thomas, 94405 Landau/Isar (DE)
(86) Internationale Anmeldenummer: PCT/EP2013/058507
(87) Internationale Veröffentlichungsnummer: WO 2013/171044

(56) Entgegenhaltungen:
- WO-A1-2012/021269
- CN-A- 101 302 361
- US-A- 4 204 033
- US-A1- 2007 141 464
- XUAN ZHAO ET AL: "Performance of Solid Oxide Iron-Air Battery Operated at 550°C", JOURNAL OF THE ELECTROCHEMICAL SOCIETY, Bd. 160, Nr. 8, 25. März 2013 (2013-03-25) , Seiten A1241-A1247, XP055065462, DOI: 10.1149/2.085308jes]

## Beschreibung

Die Erfindung betrifft ein Verfahren zur Herstellung einer Speicherstruktur einer elektrischen Energiespeicherzelle nach dem Oberbegriff des Patentanspruchs 1.

Überschüssige elektrische Energie, die beispielsweise aus erneuerbaren Energiequellen hervorgeht, lässt sich nur im bedingten Umfang im Stromnetz speichern. Dies gilt auch für überschüssige Energie, die dann bei fossilen Kraftwerken anfällt, wenn diese im optimalen wirtschaftlichen Lastbereich laufen, vom Verbraucher jedoch aus dem Netz nicht abgerufen wird. Für die Zwischenspeicherung dieser überschüssigen Energien in größeren Mengen gibt es verschiedene Großspeichervorrichtungen. Eine davon ist zum Beispiel ein Pumpspeicherkraftwerk. Auf dem Batteriesektor besteht ein Ansatz für einen elektrischen Energiespeicher darin, sogenannte Rechargeable Oxide Batteries (ROB), also Hochtemperatur-Metall-Luft-Batterien einzusetzen. Bei diesen Batterien wird ein Speichermedium je nach Batteriezustand (Laden oder Entladen) reduziert oder oxidiert. Bei einer Vielzahl dieser zyklischen Lade- (also Reduktions-) und Entlade- (also Oxidations-) Vorgänge des Speichermediums, neigt dieses Medium bei den anliegenden, vergleichsweise hohen Betriebstemperaturen einer solchen Batterie, die üblicherweise zwischen 600°C und 900°C liegen, dazu, dass die geforderte Mikrostruktur, insbesondere die Porenstruktur des Speichermediums, durch Sinterprozesse beeinträchtigt wird. Dies führt zu einer Alterung und anschließend zu einem Versagen der Batterie.

Strukturen, die aus dem Stand der Technik bekannt sind, werden beispielsweise in der WO 2012021269 A1, US2007141464 A1 und in der US 4204033 A beschrieben.

Die Aufgabe der Erfindung besteht darin, ein Verfahren zur Herstellung einer Speicherstruktur für eine Speicherzelle eines elektrischen Energiespeichers bereitzustellen, die gegenüber dem Stand der Technik eine höhere Langzeitbeständigkeit aufweist und einer höheren Zyklenzahl von Lade- und Entladevorgängen stand hält.

Die Lösung der Aufgabe besteht in einem Verfahren zur Herstellung einer Speicherstruktur mit den Merkmalen des Patentanspruchs 1.

Das erfindungsgemäße Verfahren zur Herstellung einer Speicherstruktur einer elektrischen Metall-Luft-Energiespeicherzelle umfasst ein aktives Speichermaterial und ein inertes Material. Das Verfahren beruht auf folgenden Schritten:
Zunächst wird ein poröser Grünkörper hergestellt, der das aktive Speichermaterial umfasst. Im weiteren Verfahrensschritt wird dieser poröse Grünkörper mit einem Infiltrationsmedium infiltriert, wobei das Infiltrationsmedium das inerte Material enthält. Das inerte Material kann im Infiltrationsmedium in seiner endgültigen Form oder in einer chemischen Vorform vorliegen. Anschließend folgt eine Wärmebehandlung des infiltrierten Grünkörpers zur Erzeugung einer inerten Hüllstruktur, die die Körner des aktiven Speichermaterials zumindest teilweise umhüllt.

Hierbei wird unter dem Begriff inert verstanden, dass sich ein chemisches Gleichgewicht zwischen dem inerten Material und einem möglichen Reaktanden so langsam einstellt, so dass es bei den vorherrschenden Betriebstemperaturen zu keinen Reaktionen kommt, die die Funktionalität der Speicherstruktur nachhaltig beeinflussen. Darunter wird insbesondere ein inertes Verhalten gegenüber einem gasförmigen oder flüssigen Reaktanden verstanden, der wiederum eine Reaktion mit dem Speichermaterial eingeht. Außerdem wird hierunter ein inertes Verhalten gegenüber dem Speichermaterial an sich verstanden. Insbesondere kommt als inertes Speichermaterial Zirkonoxid, Yttriumoxid, Magnesiumoxid, Ceroxid, Aluminiumoxid oder Kombinationen hiervon zum Einsatz.

Das aktive Speichermaterial liegt während des Betriebs der Energiespeicherzelle (im Folgenden vereinfacht Speicherzelle genannt) in Abhängigkeit von deren Ladezustand in unterschiedlicher chemischer Form vor. Dies bedeutet, dass das aktive Speichermaterial während des Lade- bzw. Entladevorgangs einer chemischen Umwandlung unterzogen wird. Diese chemische Umwandlung ist mit einer stetigen Volumenänderung verbunden, die jeweils mit dem Umwandlungsgrad des Speichermaterials korreliert. Die Hüllstruktur bleibt während dieser chemischen Umwandlung des aktiven Speichermaterials weitestgehend formstabil, so dass sie ein einzelnes Korn des aktiven Speichermaterials während seiner chemischen Umwandlung vor einem Versinterungsprozess schützt. In einem extremen Ladezustand (beispielsweise dem vollständig entladenen Zustand) weist das aktive Speichermaterial sein größtes Volumen auf und füllt dabei die Hüllstruktur nahezu vollständig aus. In einem anderen extremen Speicherzustand (beispielsweise dem vollständig geladenen Zustand) weist das aktive Speichermaterial ein minimales Volumen auf, wobei im Inneren der Hüllstruktur neben dem aktiven Speichermaterial ein Hohlraum, der nicht durch das Speichermaterial ausgefüllt wird, vorliegt.

Mehrere Hüllstrukturen, die um einzelne Körner des aktiven Speichermaterials herum gebildet sind, bilden wiederum eine Gerüststruktur, die dann in makroskopischer Form die eigentliche Speicherstruktur ausbildet.

Zwischen den einzelnen Hüllstrukturen kann die Gerüststruktur zudem durch weitere einzelne inerte Stützpartikel, die nicht notwendigerweise von derselben chemischen Zusammensetzung sein müssen wie das Material der Hüllstruktur, verstärkt sein. Derartige Stützpartikel können eine weitere Verstärkung der Gerüststruktur und somit der Speicherstruktur bilden.

Der Grünkörper, der im weiteren Verfahrensverlauf mit dem Infiltrationsmedium infiltriert wird, kann durch verschiedene Herstellungsverfahren dargestellt werden. Ein besonders einfaches Herstellungsverfahren ist hierbei das Pressverfahren. Hierbei kann wiederum ein uniaxiales Pressverfahren oder ein isostatisches Pressverfahren, kaltisostatisch oder heißisostatisch, angewandt werden. Ferner sind sogenannte Sedimentierverfahren, Siebdruckverfahren oder das Laminieren einer Grünfolie als zweckmäßige Herstellungsverfahren zu nennen.

Der Grünkörper zeichnet sich dadurch aus, dass er eine offene Porosität aufweist, die zwischen 20 Vol% und 50 Vol% liegt. In einer bevorzugten Ausgestaltungsform liegt die Porosität zwischen 20 Vol% und 40 Vol%. In diesen Porositätsbereichen ist eine Infiltration des Grünkörpers besonders effektiv, wobei nach der Herstellung der Speicherstruktur ein relativ hoher Anteil an aktivem Speichermaterial vorhanden ist.

Das Infiltrationsmedium kann in Form eines Sols, in Anwendung eines sogenannten Sol-Gel-Verfahrens, in Form einer Lösung oder in Form einer Suspension vorliegen. Unter einer Suspension ist hierbei ein heterogenes Stoffgemisch aus einer Flüssigkeit und einem darin fein verteilten Festkörper verstanden. Die fein verteilten Festkörperpartikel werden in der Flüssigkeit (beispielsweise Wasser oder Alkohol) durch geeignete Aggregate wie Rührer in Schwebe gehalten. Hierbei kann ein zusätzliches Dispergiermittel unterstützend angewandt werden. Unter dem Begriff Lösung versteht man die homogene Mischung zweier Substanzen, beispielsweise eines Salzes in einem Lösungsmittel, was wiederum insbesondere Wasser oder Alkohol sein kann. Nach Verdampfen des Lösungsmittels liegt der gelöste Stoff wiederum in seiner ursprünglichen chemischen Form als Feststoff vor. Unter einem Sol versteht man einen Grundstoff, der zu einem sogenannten Sol-Gel-Prozess führt, worunter wiederum ein Verfahren verstanden wird, das zur Herstellung von nichtmetallischen anorganischen oder hybridpolymeren Materialien aus kolloidalen Dispersionen besteht. Die Ausgangsmaterialien werden hierbei auch als sogenannte Precursoren bezeichnet. Aus ihnen entstehen in Lösungen in ersten Grundreaktionen feinste Teilchen. Durch eine spezielle Weiterverarbeitung der Sole lassen sich Pulver, Schichten oder Aerogele erzeugen.

In einer weiteren vorteilhaften Ausgestaltungsform der Erfindung erfolgt die Wärmebehandlung bei einer Temperatur, die zwischen 600°C und 1200°C, insbesondere zwischen 800°C und 1100°C liegt. In diesem Temperaturbereich kann eine Hüllstruktur dargestellt werden, die gegenüber den Temperaturen die beim Betrieb einer Speicherzelle auftreten, inert ist.

Zur besseren Infiltration bzw. zur Erzielung eines höheren Beladungsgrades des Grünkörpers, kann es zweckmäßig sein, dass der Infiltrations- und/oder der Wärmebehandlungsvorgang mindestens ein Mal wiederholt wird.

Durch die Wärmebehandlung wird die Hüllstruktur in vorteilhafter Weise zu einer Gerüststruktur stoffschlüssig verbunden. Hierbei bilden sich beispielsweise Sinterhälse und es kommt zu einer stoffschlüssigen, stabilen Verbindung.

In einer weiteren vorteilhaften Ausgestaltungsform der Erfindung können dem Grünkörper sowie dem Infiltrationsmedium inerte Stützpartikel beigegeben werden, die eine offene Porosität zwischen den Hüllstrukturen durch stützende Wirkung über einen längeren Zeitraum gewährleisten.

Ferner kann die Gerüststruktur von einer offenen Porosität durchzogen sein, die es einem bereits genannten Reaktanden erlaubt, zu den einzelnen Hüllstrukturen zu gelangen, diese zu durchdringen und eine Reaktion mit dem aktiven Speichermaterial im Inneren der Hüllstruktur einzugehen.

In einer bevorzugten Ausgestaltungsform der Erfindung liegt das aktive Speichermaterial in Form von Eisenoxid vor. Das Eisenoxid liegt üblicherweise bei einer Herstellung der Speicherstruktur in Form von Fe₂O₃ (Eisen (III)-oxid) vor, während des Betriebs der Speicherzelle ändern sich in der Regel die Oxidationsstufen des Eisens, weshalb der Betrieb der Speicherzelle mit den Verbindungen FeO (Eisen (II)-oxid) und/oder Fe₃O₄ (Eisen (II, III)-oxid) stattfindet. Das aktive Speichermaterial liegt insbesondere in Form eines Redoxpaares vor, das aus Eisen und Eisenoxid besteht, wobei der Anteil der jeweiligen Komponenten abhängig vom Ladezustand der elektrischen Speicherzelle ist.

Weitere Merkmale der Erfindung und weitere Vorteile werden anhand der folgenden Figuren näher erläutert. Bei der Figurenbeschreibung handelt es sich um beispielhafte Ausgestaltungsformen der Erfindung, die keine Einschränkung des Schutzbereiches darstellen.

Dabei zeigen:
Figur 1 eine schematische Darstellung der Wirkungsweise einer elektrischen Speicherzelle,
Figur 2 eine schematische Darstellung einer Gerüststruktur mit Hüllstrukturen und aktivem Speichermaterial in maximalem Volumenzustand und
Figur 3 eine Gerüststruktur wie in Figur 2 mit aktivem Speichermaterial in verringertem Volumenzustand,
Figur 4, ein Herstellungsverfahren zur Herstellung einer Speicherstruktur mit uniaxialem Pressen, Infiltration und Wärmebehandlung,
Figur 5 ein Verfahren zur Herstellung eines Grünkörpers über ein Grünfolienziehen und
Figur 6 eine Druckinfiltration eines Grünkörpers.

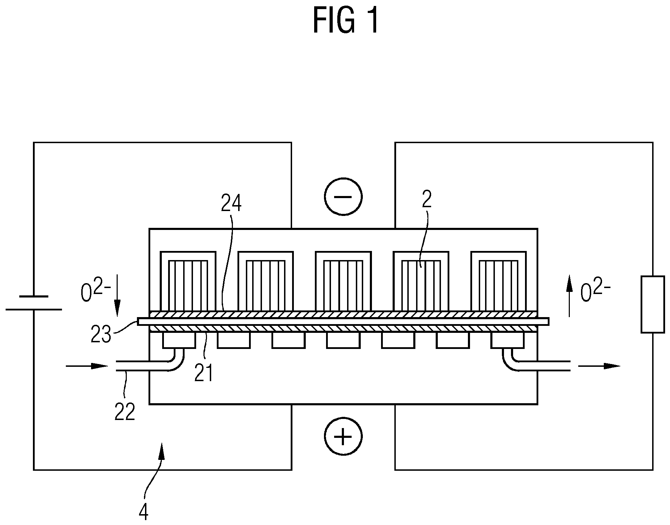

Anhand von Figur 1 soll zunächst schematisch die Wirkungsweise einer Rechargeable Oxide Batterie (ROB) beschrieben werden, insoweit dies für die vorliegende Beschreibung der Erfindung notwendig ist. Ein üblicher Aufbau einer ROB besteht darin, dass an einer positiven Elektrode 21, die auch als Luftelektrode bezeichnet wird, ein Prozessgas, insbesondere Luft, über eine Gaszufuhr 22 eingeblasen wird, wobei beim Entladen (Stromkreis auf der rechten Bildseite) der Luft Sauerstoff entzogen wird. Der Sauerstoff gelangt in Form von Sauerstoffionen O²⁻ durch einen an der positiven Elektrode anliegenden Feststoffelektrolyten 23, zu einer negativen Elektrode 24. Diese steht über ein gasförmiges Redoxpaar, z.B. ein Wasserstoff-Wasserdampf-Gemisch, mit dem porösen Speichermedium in der Kanalstruktur in Verbindung. Würde an der negativen Elektrode 24 eine dichte Schicht des aktiven Speichermaterials vorliegen, so würde die Ladekapazität der Batterie schnell erschöpft werden.

Aus diesem Grund ist es zweckmäßig, an der negativen Elektrode als Energiespeichermedium eine Speicherstruktur 2 aus porösem Material einzusetzen, das ein funktional wirkendes oxidierbares Material als ein aktives Speichermaterial 6, bevorzugt in Form von Eisen und Eisenoxid enthält.

Über ein beim Betriebszustand der Batterie gasförmiges Redoxpaar, beispielsweise H₂/H₂O, werden die durch den Festkörperelektrolyten 23 transportierten Sauerstoffionen nach ihrer Entladung an der negativen Elektrode in Form von Wasserdampf durch Porenkanäle 17 der porösen Speicherstruktur 2, die das aktive Speichermaterial 6 umfasst, transportiert. Je nachdem, ob ein Entlade- oder Ladevorgang vorliegt, wird das Metall bzw. das Metalloxid (Eisen/Eisenoxid) oxidiert oder reduziert und der hierfür benötigte Sauerstoff durch das gasförmige Redoxpaar H₂/H₂O angeliefert oder zum Festkörperelektrolyten zurück transportiert. Dieser Mechanismus des Sauerstofftransportes über ein Redoxpaar wird als Shuttlemechanismus bezeichnet.

Der Vorteil des Eisens als oxidierbares Material, also als aktives Speichermaterial 6, besteht darin, dass es bei seinem Oxidationsprozess in etwa dieselbe Ruhespannung von etwa 1 V aufweist, wie das Redoxpaar H₂/H₂O bei einem Partialdruckverhältnis von 1, andernfalls ergibt sich ein erhöhter Widerstand für den Sauerstofftransport durch die diffundierenden Komponenten dieses Redoxpaares.

Die Diffusion der Sauerstoffionen durch den Feststoffelektrolyten 23 benötigt eine hohe Betriebstemperatur von 600 bis 900°C der beschriebenen ROB, aber auch für die optimale Zusammensetzung des Redoxpaares H₂/H₂O in Gleichgewicht mit dem Speichermaterial ist dieser Temperaturbereich vorteilhaft. Hierbei ist nicht nur die Struktur der Elektroden 21 und 24 und des Elektrolyten 23 einer hohen thermischen Belastung ausgesetzt, sondern auch die Speicherstruktur 2, die das aktive Speichermaterial 6 umfasst. Bei den stetigen Zyklen von Oxidation und Reduktion neigt das aktive Speichermaterial dazu, zu versintern, das bedeutet, dass die einzelnen Körner immer mehr miteinander durch Diffusionsprozesse verschmelzen, die reaktive Oberfläche sinkt und die für den Gastransport erforderliche durchgehend offene Porenstruktur verschwindet. Bei einer geschlossenen Porenstruktur kann das Redoxpaar H₂/H₂O die aktive Oberfläche des aktiven Speichermaterials 6 nicht mehr erreichen, so dass bereits nach einer Teilentladung des Speichers der Innenwiderstand der Batterie sehr hoch wird, was eine weitere technisch sinnvolle Entladung verhindert.

Ein Vorteil der ROB besteht darin, dass sie durch ihre kleinste Einheit, nämlich die Speicherzelle, modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

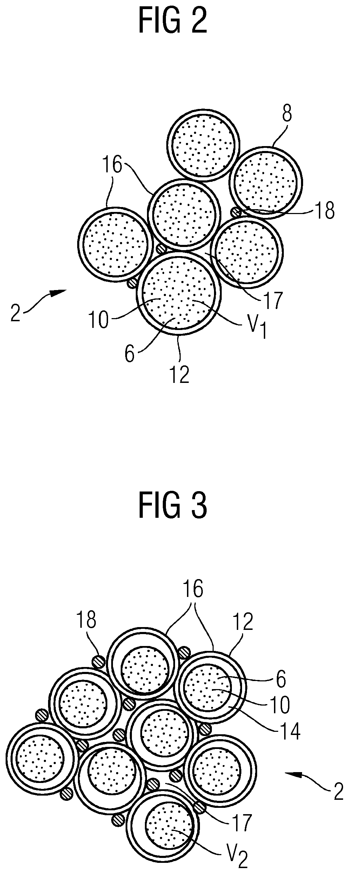

Anhand der Figuren 2 und 3 ist schematisch, in idealisierter Form, ein Ausschnitt aus einer Speicherstruktur 2 dargestellt. In Figur 2 liegt die Speicherstruktur in der Form vor, wie sie direkt nach einer Herstellung aussieht. Im Innersten ist hierbei ein aktives Speichermaterial 6 vorgesehen, das in Form von Körnern 10 vorliegt. Diese Körner 10 sind wiederum von einer Hüllstruktur 12 umgeben, die aus einem inerten Material 8, beispielsweise Zirkonoxid, Yttriumoxid, Magnesiumoxid, Ceroxid und/oder Aluminiumoxid sowie Kombinationen hiervon besteht. Dieses inerte Material ist mechanisch und thermisch stabil, weist dabei jedoch eine gewisse Porosität auf. Diese hier nicht dargestellte Porosität ist dazu geeignet, den bereits beschriebenen gasförmigen Reaktanden in Form von H₂/H₂O zum aktiven Speichermaterial 6 durchzulassen.

Mehrere kugelförmige Hüllstrukturen wiederum ergeben eine Gerüststruktur 16. Diese Gerüststruktur 16 kann so aufgebaut sein, dass die einzelnen Hüllstrukturen 12 ggf. durch Sinterhälse zur Stabilisierung miteinander verbunden sind. Ferner kann es zweckmäßig sein, zwischen den Hüllstrukturen 12 weitere inerte Stützpartikel 18 einzulagern. Diese inerten Stützpartikel 18 sind ebenfalls wie das inerte Material 8 der Hüllstruktur 12 gegenüber dem Reaktanden H₂/H₂O bzw. Eisen und Eisenoxid inert.

In Figur 2 ist das aktive Speichermaterial mit seiner größten Volumenausdehnung V₁ dargestellt, wobei es die Hüllstruktur 12 nahezu vollständig ausfüllt. Dies ist beispielsweise dann der Fall, wenn die Speicherzelle vollständig entladen ist, in diesem Fall liegt das aktive Speichermaterial vollständig in Form von Eisenoxid (FeO oder Fe₃O₄) vor. Durch einen Ladeprozess der Speicherzelle 2 erfolgt eine chemische Umwandlung des aktiven Speichermaterials 6 von Eisenoxid in Eisen, wobei während des Lade- und Entladevorgangs eine Mischung aus Eisen und Eisenoxid vorliegt. Da Eisen in elementarer Form eine höhere Dichte aufweist als das Eisenoxid, also weniger Volumen beansprucht, so ist das Innere der Hüllstruktur 12 im vollständig geladenen Zustand mit dem aktiven Speichermaterial 6, also dem nun vorliegenden elementaren Eisen, deutlich weniger ausgefüllt, was anhand des Volumens V₂ in Figur 3 symbolisiert ist. Ferner liegt nun in der Hüllstruktur 12 ein Hohlraum 14 vor, der hier schematisch um die ebenfalls schematisch kreisrund dargestellten Körner 10 des aktiven Speichermaterials 6 herum vorliegt. Hierbei handelt es sich selbstverständlich nur um eine schematische Darstellung, bei den Oxidations- bzw. Reduktionsprozessen können die einzelnen Körner 10 auch in sehr viele kleine Unterkörner zerfallen, so dass der Hohlraum 14 deutlich unregelmäßiger ausgeprägt ist als dies in Figur 3 dargestellt ist.

Bei einem weiteren Entladeprozess der elektrischen Speicherzelle 4 wird das aktive Speichermaterial 6 nun wiederum in Eisenoxid umgewandelt, was wiederum mit einer Volumenzunahme verbunden ist, wonach die Hüllstruktur 12 nach vollständigem Laden der Speicherzelle 2 wieder nahezu vollständig mit dem aktiven Speichermaterial 6 gefüllt ist. Hierin ist ein wesentlicher Vorteil der beschriebenen Speicherstruktur zu erkennen, sie ermöglicht es, Volumenunterschiede des aktiven Speichermaterials in mikroskopischem Maßstab zu kompensieren, so dass kein Versinterungsprozess zwischen dem aktiven Speichermaterial stattfindet und die Körner 10 des aktiven Speichermaterials durch die Hüllstruktur 12 geschützt sind. Die einzelnen Hüllstrukturen 12 stützen sich wiederum gegenseitig insoweit, dass sie zur Gerüststruktur 16 verbunden sind. Die Porosität, also die Gasdurchlässigkeit der Hüllstruktur 12 ist so bemessen, dass gasförmiges H₂/H₂O in ausreichendem Maße durch die Hüllstruktur strömen bzw. diffundieren kann, um eine angemessene Reaktionsgeschwindigkeit zur Oxidation bzw. Reduktion des Eisens bzw. Eisenoxides sicherzustellen. Das beschriebene Redoxpaar H₂/H₂O wird hierbei durch Porenkanäle 17, die durch die Gerüststruktur 16 verlaufen, geführt.

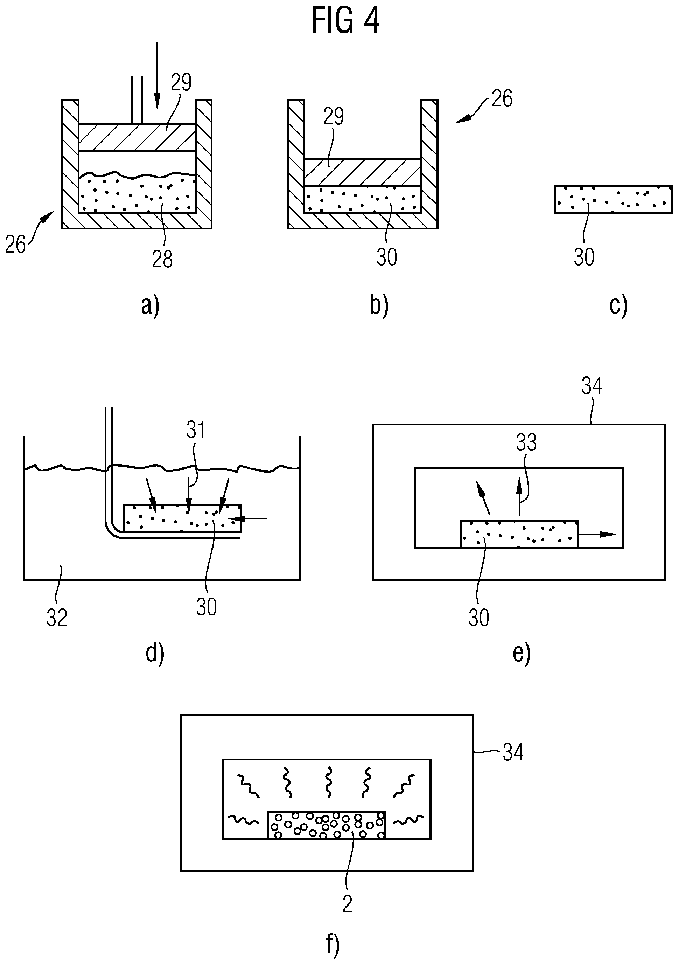

In Figur 4 ist beispielhaft die Herstellung eines Grünkörpers 30 sowie dessen Infiltration mit einem Infiltrationsmedium 32 und dessen Wärmebehandlung zur Umwandlung des Grünkörpers 30 in die Speicherstruktur 2 dargestellt. Hierbei wird zunächst in einem Prozessschritt a in eine uniaxiale Presse 26 eine Pulverschüttung 28 gegeben. In der uniaxialen Presse wird die Pulverschüttung 28 durch Bewegen des Pressstempels 29 zu dem Grünkörper 30 gepresst, was in dem Verfahrensabschnitt b gezeigt ist. Der Grünkörper 30 wird wie in c gezeigt entformt und anschließend, hier schematisch dargestellt, in ein Infiltrationsmedium 32 gegeben (d). In dem Infiltrationsmedium 32 erfolgt die Infiltration des Grünkörpers 30 mit dem Infiltrationsmedium, was in diesem Fall in Form einer Suspension aus Wasser und Zirkonoxid vorliegt. Die Infiltration wird durch die Pfeile 31 veranschaulicht. Der nun infiltrierte Grünkörper 30 wird in eine Wärmebehandlungsvorrichtung 34 gegeben, wo zunächst das Lösungsmittel, in dem die Partikel der Suspension gelöst sind, ausgasen kann. Dieses Ausgasen des Lösungsmittels wird durch die Pfeile 33 im Verfahrensschritt e veranschaulicht. In einem weiteren Verfahrensschritt, f, wird nun die Temperatur der Wärmebehandlung auf ca. 900°C erhöht und es erfolgt eine Sinterung der infiltrierten inerten Zirkonoxid-Partikel, die sich in Form einer Hülle um die Partikel des Grünkörpers 30 legen. Die Partikel des Grünkörpers 30 bestehen aus den Körner 10 des Speichermaterials, wie dies in Figur 2 veranschaulicht ist. Nach dem Wärmebehandlungsprozess liegen die Partikel des inerten Materials, das durch das Infiltrationsmedium 32 in den Grünkörper 30 eingebracht wird, in Form der Hüllstruktur 12 schützend um die Körner 10 des Speichermaterials vor. Die in Figur 2 dargestellten Stützpartikel 18, die ebenfalls aus einem inerten Material bestehen, sind hierbei rein fakultativ. Durch den Sinterprozess bilden sich aufgrund einer Oberflächenkontraktion auch Poren bzw. Öffnungen in der Hüllstruktur, durch die das Shuttlegas ins Innere zum aktiven Speichermaterial strömen kann.

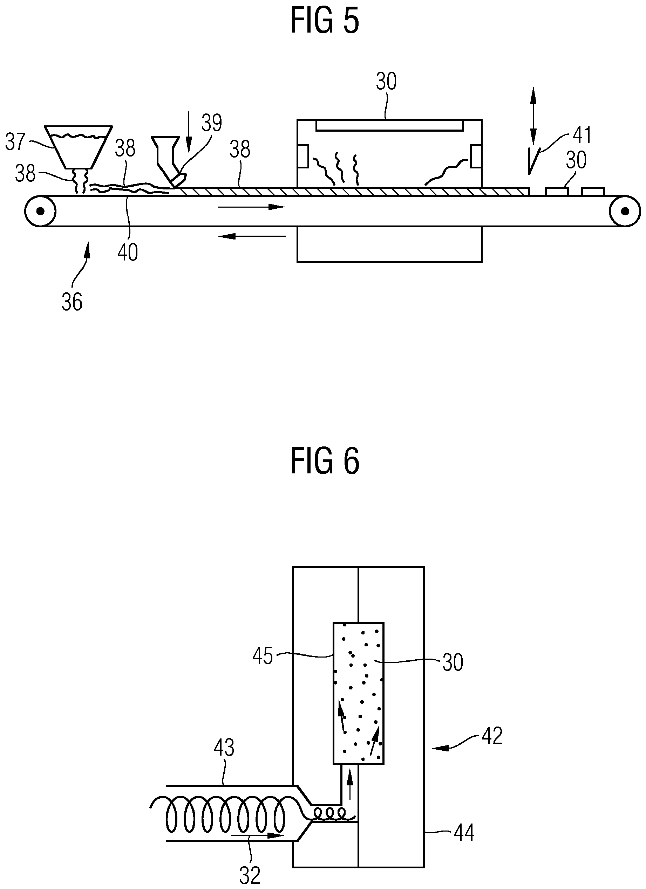

Bei dem in Figur 4 dargestellten Verfahren handelt es sich um eine Kombination eines uniaxialen Pressverfahrens zur Herstellung des Grünkörpers 30 mit einem Tauchinfiltrationsverfahren, wobei zur Infiltration des Grünkörpers 30 durch das Infiltrationsmedium 32 die Kapillarkräfte in Anspruch genommen werden. Grundsätzlich gibt es jedoch sowohl für die Herstellung des Grünkörpers 30 als auch für dessen Infiltration mit dem Infiltrationsmedium 32 eine Vielzahl von verschiedenen Möglichkeiten, die untereinander kombiniert werden können. Als weiteres zweckmäßiges Herstellungsverfahren für die Herstellung des Grünkörpers sei exemplarisch anhand der Figur 5 das Folienziehverfahren dargestellt.

In Figur 5 ist eine Folienziehanlage 36 dargestellt, wobei aus einem Vorratsbehälter 37 ein Precursor 38 (der nicht zwangsläufig identisch sein muss mit dem Precursor für einen Sol-Gel-Prozess) auf ein Förderband 40 gegeben wird. Die Masse des Precursors wird durch ein Rakel 39 glattgestrichen und in einer (in dieser Form anders als in Fig. 4 ausgestalteten) Wärmebehandlungsvorrichtung 34 einer Wärmebehandlung unterzogen. Nachdem das Förderband die Folie aus der Wärmebehandlungsvorrichtung 34 herausbefördert hat, wird durch ein Schneidewerkzeug 41 der nun entstandene Grünkörper 30 in entsprechende Teile geschnitten. Diese Teile des Grünkörpers 30 können gegebenenfalls übereinander gestapelt und laminiert werden, um so die benötigte Höhe des Grünkörpers entsprechend anzupassen.

In Figur 6 ist für das Infiltrationsverfahren ein alternatives Verfahren zum Tauchinfiltrationsverfahren gemäß Figur 4 dargestellt. In Figur 6 handelt es sich um ein Druckinfiltrationsverfahren. Hierbei wird der Grünkörper 30 in eine Druckinfiltrationsvorrichtung 42 gegeben, wobei die Druckinfiltrationsvorrichtung 42 ein Druckinfiltrationswerkzeug 44 sowie einen Extruder 43 umfasst. Der Grünkörper 30 ist dabei in einem Formhohlraum 45 des Druckinfiltrationswerkzeugs 44 so eingelagert, dass möglichst wenig Biege- und Scherkräfte auf ihn wirken. Durch den Extruder 43 wird das Infiltrationsmedium 32 analog eines Spritzgussverfahrens mit hohem Druck in den Formhohlraum 45, der mit dem Grünkörper 30 belegt ist, gepresst. Das Infiltrationsmedium wird durch den hohen Druck des Extrusionsverfahrens in die Poren des Grünkörpers hineingepresst. Grundsätzlich ist es auch möglich, eine Vorrichtung zu verwenden, die analog des Metalldruckgusses fungiert und mit der das Infiltrationsmedium 32 mit hohem Druck in flüssiger Form in den Grünkörper 30 gepresst wird.

Die beschriebene Gerüststruktur, die aus den verschiedenen Hüllstrukturen aufgebaut ist, weist bezogen auf das Gesamtvolumen der Speicherstruktur 2 einen relativ geringen Volumenanteil auf, der bevorzugt weniger als 20 Vol.% beträgt. Mit diesem verhältnismäßig geringen Volumenanteil ist durch die beschriebene Methode in der beschriebenen Ausgestaltung der Speicherstruktur eine sehr hohe mechanische Festigkeit realisierbar. Diese mechanische Festigkeit besteht auch bei hohen Temperaturen, die im Betrieb der ROB bei 600°C bis 900°C vorliegen. Mit dieser hohen Festigkeit der Gerüststruktur 16 ist eine hohe Anzahl von Oxidations- und Reduktionszyklen möglich, in denen sich das Volumen der Körner 10 des aktiven Speichermaterials 6 ausdehnt und wieder zusammenzieht und wobei die Hüllstruktur 12 im Wesentlichen unverändert, insbesondere unbeschädigt, bleibt. Selbstverständlich ist auch die Hüllstruktur 12 bzw. das inerte Material 8 bei den beschriebenen hohen Temperaturen und in der aggressiven chemischen Umgebung Veränderungen ausgesetzt, die beispielsweise in Form von chemischen Oberflächenreaktionen oder Diffusionsprozessen stattfinden können. Im Wesentlichen bleibt die Struktur der Hüllstruktur 12 jedoch bestehen und funktionsfähig.

Durch die beschriebene Speicherstruktur ist es möglich, eine großtechnisch reproduzierbare, flexible und kostengünstige Herstellung der Speicherstruktur zu gewährleisten und sie ist auf verschiedene Metallspeichermaterialien und Hüllenmaterialien anwendbar.

## Patentansprüche

1. Verfahren zur Herstellung einer Speicherstruktur (2) einer elektrischen Metall-Luft-Energiespeicherzelle (4) umfassend ein aktives Speichermaterial (6) und ein inertes Material (8), umfassend folgende Schritte:
- Herstellen eines porösen Grünkörpers (30), der das aktive Speichermaterial (6) umfasst,
- Infiltration des porösen Grünkörpers (30) mit einem Infiltrationsmedium (32), das das inerte Material (8)enthält und
- Wärmebehandlung des infiltrierten Grünkörpers (30) zur Erzeugung einer inerten Hüllstruktur (12), die Körner des aktiven Speichermaterials (6) zumindest teilweise umhüllt.

2. Verfahren nach Anspruch 1, **dadurch gekennzeichnet, dass** der Grünkörper (30) durch ein Pressverfahren, ein Sedimentierverfahren, ein Siebdruckverfahren oder durch Laminieren einer Grünfolie hergestellt wird.

3. Verfahren nach Anspruch 1 oder 2, **dadurch gekennzeichnet, dass** der Grünkörper (30) eine offene Porosität zwischen 20 Vol% und 50 Vol %, insbesondere zwischen 20 Vol% und 40 Vol% aufweist.

4. Verfahren nach einem der vorhergehenden Ansprüche **dadurch gekennzeichnet, dass** das Infiltrationsmedium (32) in Form eines Sols, einer Lösung oder einer Suspension vorliegt.

5. Verfahren nach einem der vorhergehenden Ansprüche, **dadurch gekennzeichnet, dass** die Wärmebehandlung bei einer Temperatur zwischen 600° C und 1200° C, insbesondere zwischen 800° C und 1100° C stattfindet.

6. Verfahren nach einem der vorhergehenden Ansprüche, **dadurch gekennzeichnet, dass** der Infiltrations- und/oder der Wärmebehandlungsvorgang mindestens einmal wiederholt wird.

7. Verfahren nach einem der vorhergehenden Ansprüche, **dadurch gekennzeichnet, dass** Hüllstrukturen (12) einzelner Speichermaterialkörner (10) durch die Wärmebehandlung zu einer Gerüststruktur (16) formschlüssig verbunden werden.

8. Verfahren zur Herstellung einer Speicherstruktur nach einem der vorhergehenden Ansprüche, **dadurch gekennzeichnet, dass** dem Grünkörper (30) und/oder dem Infiltrationsmedium (32) inerte Stützpartikel (18) beigegeben werden.

## Claims

1. Method for producing a storage structure (2) of an electrical metal-air energy storage cell (4) comprising an active storage material (6) and an inert material (8), comprising the following steps:
- producing a porous green body (30), which comprises the active storage material (6),
- infiltrating the porous green body (30) with an infiltration medium (32), which contains the inert material (8), and
- heat treating the infiltrated green body (30) to produce an inert envelope structure (12), which at least partially envelops the grains of the active storage material (6).

2. Method according to Claim 1, **characterized in that** the green body (30) is produced by a compression method, a sedimentation method, a screen printing method, or by lamination of a green film.

3. Method according to Claim 1 or 2, **characterized in that** the green body (30) has an open porosity between 20 vol.-% and 50 vol.-%, in particular between 20 vol.-% and 40 vol.-%.

4. Method according to any one of the preceding claims, **characterized in that** the infiltration medium (32) is provided in the form of a sol, a solution, or a suspension.

5. Method according to any one of the preceding claims, **characterized in that** the heat treatment takes place at a temperature between 600°C and 1200°C, in particular between 800°C and 1100°C.

6. Method according to any one of the preceding claims, **characterized in that** the infiltration operation and/or the heat treatment operation is repeated at least once.

7. Method according to any one of the preceding claims, **characterized in that** envelope structures (12) of individual storage material grains (10) are connected in a formfitting manner by the heat treatment to form a framework structure (16).

8. Method for producing a storage structure as claimed in any one of the preceding claims, **characterized in that** inert support particles (18) are added to the green body (30) and/or the infiltration medium (32).

## Revendications

1. Procédé de fabrication d'une structure (2) d'accumulation d'un élément (4) d'accumulateur d'énergie électrique métal-air, comprenant une matière (6) active d'accumulateur et une matière (8) inerte, comprenant les stades suivants :
- production d'un corps (30) à vert poreux, qui comprend la matière (6) active d'accumulation,
- Infiltration du corps (30) à vert poreux par un milieu (32) d'infiltration, qui contient la matière (8) inerte et
- traitement thermique du corps (10) à vert infiltré pour produire une structure (12) inerte d'enrobage, qui enrobe, au moins en partie, les grains de la matière (6) active d'accumulateur.

2. Procédé suivant la revendication 1, **caractérisé en ce que** l'on produit le corps (30) à vert par un procédé à la presse, par un procédé de sédimentation, par un procédé de sérigraphie ou par laminage d'une feuille à vert.

3. Procédé suivant la revendication 1 ou 2, **caractérisé en ce que** le corps (30) à vert a une porosité ouverte, comprise entre 20% en volume et 50% en volume, notamment entre 20% en volume et 40% en volume.

4. Procédé suivant l'une des revendications précédentes, **caractérisé en ce que** le milieu (32) d'infiltration se présente sous la forme d'un sol, d'une solution ou d'une suspension.

5. Procédé suivant l'une des revendications précédentes, **caractérisé en ce que** le traitement thermique a lieu à une température comprise entre 600°C et 1200°C, notamment entre 800°C et 1100°C.

6. Procédé suivant l'une des revendications précédentes, **caractérisé en ce que** l'on répète au moins une fois l'opération d'infiltration et/ou du traitement thermique.

7. Procédé suivant l'une des revendications précédentes, **caractérisé en ce que** l'on relie, à complémentarité de forme, des structures (12) d'enrobage de grains (10) individuels de matière d'accumulateur par le traitement thermique en une structure (16) squelette.

8. Procédé de production d'une structure d'accumulateur suivant l'une des revendications précédentes, **caractérisé en ce que** l'on ajoute des particules (18) d'appui inerte au corps (30) à vert et/ou au milieu (32) d'infiltration.
